# EUROPEAN PATENT SPECIFICATION

(11) **EP 3 006 147 B1**
(45) Date of publication and mention of the grant of the patent: **30.01.2019**
(21) Application number: 14188353.8
(22) Date of filing: 09.10.2014
(51) Int. Cl.: B23B 51/04, B23B 31/107

(54) **HOLE SAW ASSEMBLY AND METHOD FOR FASTENING AND RELEASING OF A DRILL ROD OF SUCH AN ASSEMBLY**
LOCHSÄGENANORDNUNG UND VERFAHREN ZUM BEFESTIGEN UND LÖSEN EINER BOHRSTANGE EINER SOCLHEN ANORDNUNG
ENSEMBLE DE SCIE-CLOCHE ET MÉTHODE DE MONTAGE ET DE DEMONTAGE D'UN FORET D'UN TEL ENSEMBLE

(43) Date of publication of application: 13.04.2016
(73) Proprietor: Rote Mate Industry Co., Ltd., 42851 Taichung City (TW)
(72) Inventor: Lai, Ying-Tsung, 42851 Taichung City (TW)
(74) Representative: Lang, Christian

(56) References cited:
- DE-U1- 9 417 252
- DE-U1-202004 003 900
- DE-U1-202013 102 478
- US-A1- 2002 028 117

## Description

### BACKGROUND OF THE INVENTION

### Field of the invention

The present invention relates to a hole saw assembly, especially to a hole saw assembly that includes a drill rod able to be mounted in and released from a hole saw quickly. The present invention also relates to a method for fastening and releasing of a drill rod of such an assembly. The drill rod is generally fixed in an axial hole of the hole saw and is applied to hole saws with different diameters used as a shaft for positioning. Thus the hole saw will not have offset during rotation.

### Descriptions of Related Art

In a conventional hole saw assembly, a drill rod can be quickly changed from the hole saw by a quick release device. The design of most of the quick release devices is for hole saws with larger diameter (such as hole saws with the diameter larger than 30mm). For example, refer to US Pat. No. 8328474, a quick change arbor, a hole cutter and a method suitable for hole saws with high torsion and large diameter are revealed. A hole cutter 12 includes an end plate 14. A drive shank 24 includes a body portion 26 with flats 25. The flats 25 are fastened on the end plate 14 while the pilot bit 64 is arranged at the drive shank 24. The body portion 26 is assembled with a collar 50 to form the quick change pilot bit 64. The quick change device is connected to the drive shank 24 and is having drive pins 36 set on the end plate 14 and driven into the corresponding drive pin apertures 18. The hole cutter 12 uses the drive shank 24 as a main transmission shaft. However, such structure is unable to be applied to hole saws with diameter smaller than 30mm. This is due to that the width of the contact surface of the hole saws with the diameter smaller than 30mm is unable to be assembled with the drive pins 36.

Refer to Canadian Pat. No. 2283453, an extractor is revealed. The extractor is applied to hole saws with small diameter. An adaptor is axially movable along a drill rod so as to remove debris attached on a hole saw and the drill rod. The drill rod is unable to be released from the adaptor. When the drill rod gets damaged, the drill rod and the adaptor should be replaced together. The adaptor is axially moved and then a head part of the drill rod is positioned by radial rotation. The adaptor is against and locked by a spring. After being used for a period of time, the spring may undergo elastic fatigue and the adaptor is unable to be locked and positioned on the position required. This results in that the head part of the drill rod is unable to be positioned and moved axially. This is dangerous for the users during the operation because the head part may be biased and get broken. Thus the drill rod is unable to be used as a positioning shaft of the hole saw.

For overcoming shortcomings of the conventional devices, reducing offset of the drill rod and quick change of the drill head from the hole saw, there is a need to provide a novel hole saw assembly that includes a quick release device designed for hole saws with diameter no more than 30mm.

### SUMMARY OF THE INVENTION

Therefore it is a primary object of the present invention to provide a hole saw assembly according to claim 1 comprising a hole saw, a quick release device and a drill rod. A secondary object of the present invention is to provide a method for fastening and releasing of a drill rod of such an assembly according to claim 6. The quick release device and the drill rod are disposed on the hole saw. The diameter of the hole saw is no more than 30mm. The hole saw consists of an end surface and an opening. The opening is circular and the end surface is arranged with a threaded hole. The drill rod including a drill head and a shank is assembled with the quick release device. The shank is extended to form the drill head and a circular groove is disposed on the shank.

The quick release device is composed of a ring, a sleeve and a drive body. The ring is composed of a first end and a second end. The first end has a flange while the second end has a hexagonal hole. The sleeve has an extension portion that is extended to form a first connection portion. The sleeve also includes an axial hole that is extended axially from the extension portion to the first connection portion. The drive body includes a second connection portion. The second connection portion is axially extended to form a stopping portion while the stopping portion is extended axially to form a hexagonal portion. The axial extension of the hexagonal portion forms a threaded portion. The drive body further includes an assembly hole that is axially extended from the second connection portion to the threaded portion. The second connection portion is arranged with at least one socket and a spring is fitted over the hexagonal portion.

The second connection portion is mounted into the first connection portion and the stopping portion is against the edge of the first connection portion. The sleeve is assembled with the drive body first and then is mounted into the ring. The threaded portion is extended from the ring and the flange of the ring is around the extension portion of the sleeve. Thereby the quick release device is formed.

The quick release device is threaded into the hole saw and the drill rod 5 is directly slid into and assembled with the quick release device. The quick release device has a structure for releasing and locking the drill head. Thereby the drill rod is fitted into the quick release device and users can fasten and release the drill rod quickly. Users can also quickly mount the shank quickly into the hole saw. The drill rod is fast slid out of the quick release device for replacement of a new drill rod. Then the shank is locked on the hole saw so as to be rotated synchronously with the hole saw.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is an explosive view of an embodiment according to the present invention;
Fig. 1-1 is a schematic drawing showing a second end of a ring of an embodiment according to the present invention;
Fig. 2 is an explosive view of a quick release device of an embodiment according to the present invention;
Fig. 3 is a perspective view of a quick release device of an embodiment according to the present invention;
Fig. 4 is a perspective view of an embodiment according to the present invention;
Fig. 5 is a schematic drawing showing an embodiment in use according to the present invention;
Fig. 6 is another schematic drawing showing an embodiment in use according to the present invention.

### DETAILED DESCRIPTION OF THE PREFERRED EMBODIMENT

Please refer to following embodiments for details, features and effects of the present invention.

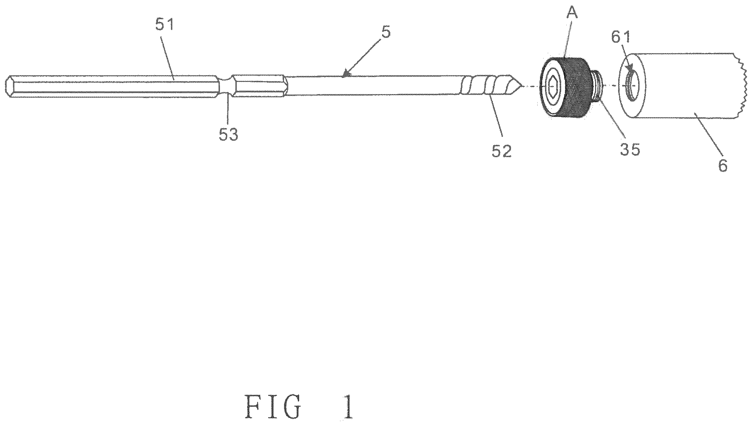

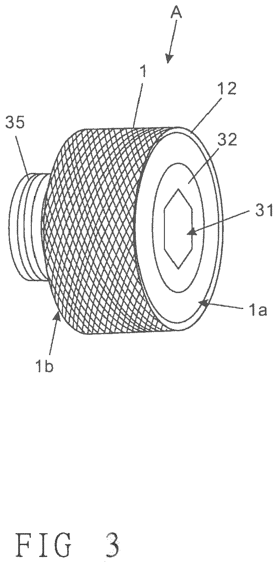

A hole saw assembly of the present invention is a hole saw 6 with a quick change drill rod 5. Refer to Fig. 1, Fig. 2 and Fig. 3, the hole saw assembly includes the hole saw 6, a quick release device A and the drill rod 5. Both the quick release device A and the drill rod 5 are assembled with the hole saw 6. The hole saw 6 includes an end surface and an open end. The open end is a circular opening while the end surface is disposed with a threaded hole 61. The drill rod 5 is assembled with the quick release device A and is having a drill head 52 and a shank 51. The shank 51 is a hexagonal prism and is extended axially to form the drill head 52. A circular groove 53 is arranged at the shank 51.

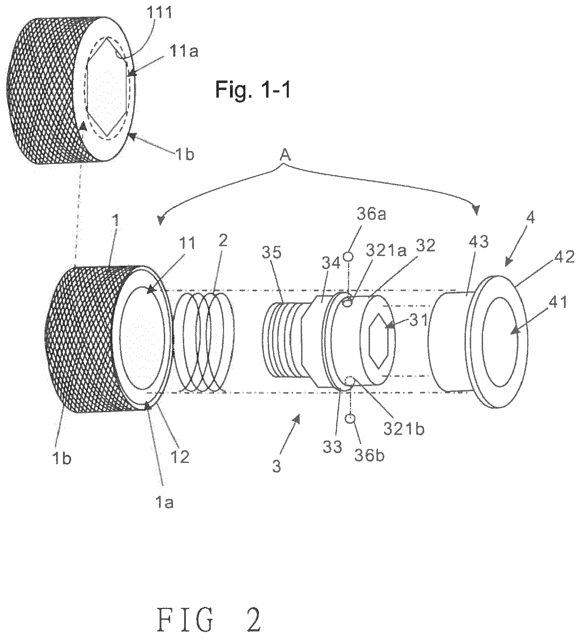

As shown in Fig. 2, the quick release device A consists of a ring 1, a sleeve 4 and a drive body 3. The ring 1 is composed of a mounting hole 11, a first end 1a and a second end 1b. The mounting hole 11 is a circular hole penetrating the ring 1. The mounting hole 11 is extended to the second end 1b and formed a hexagonal hole 11a at the second end 1b, as shown in Fig. 1-1. Thereby the second end 1b forms a stopping part 111. The hexagonal hole 11a is a bit smaller than the mounting hole 11 so that the second end 1b becomes the stopping part 111. The first end 1a has a flange 12. The sleeve 4 has an axial hole 41, an extension portion 42, and a first connection portion 43. The extension portion 42 is extended to form the first connection portion 43 while the axial hole 41 is extended axially from the extension portion 42 to the first connection portion 43. The drive body 3 includes an assembly hole 31, a second connection portion 32, a stopping portion 33, a hexagonal portion 34 and a threaded portion 35. The stopping portion 33 is formed by axial extension of the second connection portion 32 while the stopping portion 33 is extended axially to form the hexagonal portion 34 and the hexagonal portion 34 is extended axially to form the threaded portion 35. The assembly hole 31 is hexagonal and is axially extended from the second connection portion 32 to the threaded portion 35, penetrating the drive body 3.

The second connection portion 32 is disposed with at least one socket 321a, 321b. Each of the sockets 321a, 321b needs to fit a bead 36a, 36b. A spring 2 is fitted over the hexagonal portion 34 and the second connection portion 32 is mounted into the axial hole 41 of the first connection portion 43. The stopping portion 33 is against the edge of the first connection portion 43.

The sleeve 4 is assembled with the drive body 3 first and then is mounted into the mounting hole 11 of the ring 1. The extension portion 42 is against the edge of the first end 1a. The threaded portion 35 is extended from the second end 1b of the ring 1 while the hexagonal portion 34 is fitted in the hexagonal hole 11a of the ring 1. The flange 12 of the ring 1 is around the outer diameter of the extension portion 42 of the sleeve 4. Thus the ring 1 can be axially moved within a certain distance around the outer diameter of the drive body 3 and turned back to the original position. Therefore the assembly of the quick release device A is completed.

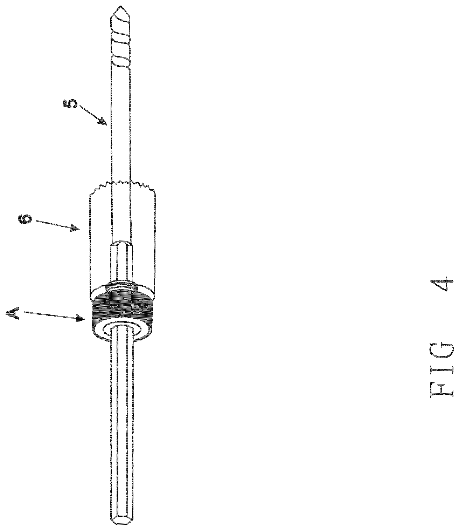

As shown on Fig. 4, the threaded portion 35 of the quick release device A is engaged with the threaded hole 61 of the hole saw 6 and the drill rod 5 is directly slid into and assembled with the quick release device A so as to form the hole saw assembly. The drill rod 5 can be fastened or released by the quick release device A. The drill rod 5 is mounted into the quick release device A so that users can fasten and release the drill rod 5 quickly. The user can quickly assemble the shank 51 on the hole saw 6. The shank 51 of the drill rod 5 can be slide out of the quick release device A for replacement of a new drill rod 51. Then the shank 51 of the new drill rod 51 is fastened on the hole saw 6 by the quick release device A so that the shank 51 can rotate with the hole saw 6 synchronously.

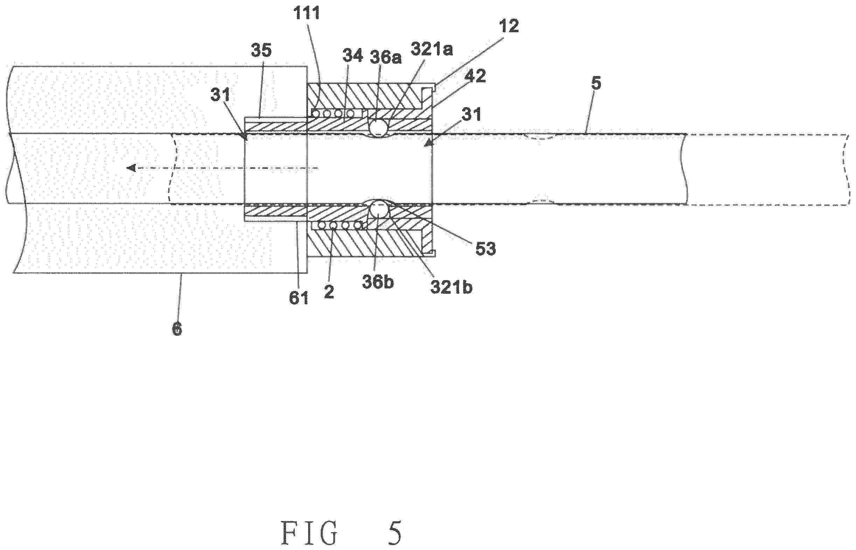

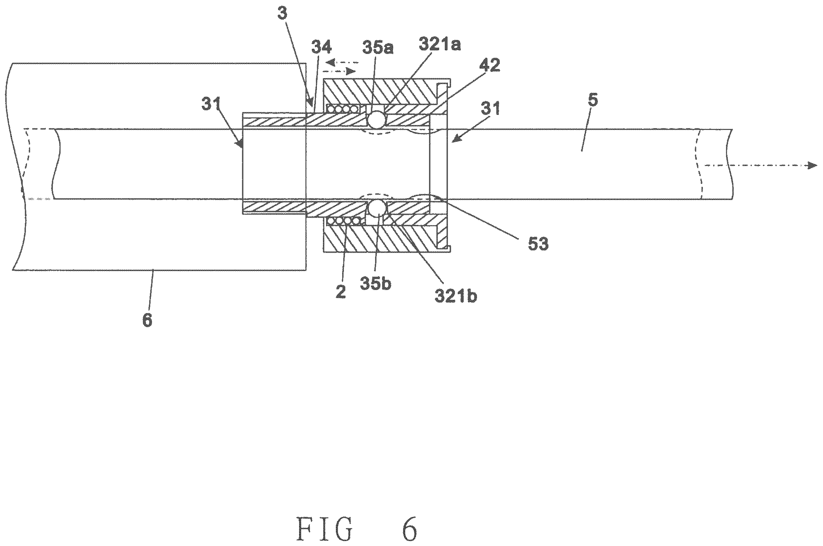

As shown in Fig. 5 and Fig. 6, first the threaded portion 35 of the quick release device A is fastened in the threaded hole 61 of the hole saw 6 a. Then the ring 1 of the quick release device A is axially removed within a certain distance. Thereby the edge of the first connection portion 43 of the sleeve 4 is away from the sockets 321a, 321b. Now the beads 36a, 36b in the sockets 321a, 321b respectively are no more pressed by the first connection portion 43 and are moveable. Then the shank 51 of the drill rod 5 is inserted into the assembly hole 31 of the quick release device A, slid through the threaded portion 35 and penetrated the hole saw 6. The ring 1 is not released until the circular groove 53 of the shank 51 is moved to the position of the sockets 321a, 321b. Next the ring 1 is turned back due to the spring 2. At the same time, the sleeve 4 is also turned back due to the ring 1. Now the inner surface of the first connection portion 43 of the sleeve 4 presses the beads 36a, 36b so that the beads 36a, 36b are stopped and fixed in the sockets 321a, 321b and against the circular groove 53 of the shank 51 respectively. Thereby the shank 51 is locked and fastened in the quick release device A. Refer to Fig. 5, one end of the shank 51 is extended from the quick release device A and is used as a transmission shaft of the hole saw 6 assembly. Moreover, the ring of the quick release device A is moved axially within a certain distance again when the drill rod 5 is quickly slid out of the quick release device A. The edge of the first connection portion 43 of the sleeve 4 is away from the sockets 321a, 321b. As shown in Fig. 6, without being pressed by the first connection portion 43, the beads 36a, 36b in the sockets 321a, 321b respectively are moveable. Thus the circular groove 53 of the shank 51 is no more locked and fastened by the beads 36a, 36b. The shank of the drill rod can be slid out of the quick release device A and released from the hole saw 5. The ring 1 is not released and not turned back until the drill rod 5 is completely released.

The present invention has following advantages:
1. First of all, the drill rod 5 is directly inserted through the quick release device A while the quick release device A is directly assembled with the hole saw 6. The shank 51 of the drill rod 5 is a transmission shaft of the hole saw 6. After being connected to electric tools, the shank 51 is driven to rotate by the electric tools and the drill head 52 is synchronously driven to rotate by the shank 51. Thus offset caused by vibration during high-speed rotation can be avoided.
2. Secondly, the quick release device A of the present invention with simple structure is directly engaged and integrated with the hole saw 6 to form an integrate assembly. Thereby the drill rod 5 can be directly slid into the assembly of the quick release device A with the hole saw 6. Once the user wants to remove the drill rod 5 from the hole saw 6, he only needs to move the ring 1 axially within a certain distance. Thus the drill rod 5 is released from the hole saw 6 quickly.
3. The assembly hole 31 of the drive body 3 is hexagonal. The shape of the assembly hole 31 matches that of the shank 51 of the drive rod 5 so that the shank 51 can be mounted into the assembly hole 31. The hexagonal portion 34 of the drive body 3 is fitted into the hexagonal hole 11a of the ring 1 so that the drill rod 5 can be positioned during the rotation and idle rotation can be avoided. Moreover, the drive body 3 is moved axially, but not radially within the hexagonal hole 11a of the ring 1. In other words, the ring is moved along the drive body 3.

It should be noted that the quick release device A of the present invention is a component of the hole saw 6 and used for quick replacement and fastening of the drill rod 5. The assembly of the present invention is suitable for hole saws whose diameter is no more than 30mm.

## Claims

1. A hole saw assembly comprising: a hole saw (6), a quick release device (A) and a drill rod (5);
wherein the quick release device (A) includes a ring (1), a sleeve (4) and a drive body (3); the ring (1) is arranged with a mounting hole (11), a first end (1a) and a second end (1b); the mounting hole (11) is a circular hole penetrating the ring (1); first end (1a) has a flange (12) while the second end (1b) has a hexagonal hole (11a); the sleeve (4) includes an extension portion (42), a first connection portion (43) formed by extension of the extension portion (42), and an axial hole (41) that extends axially from the extension portion (42) to the first connection portion (43); the drive body (3) includes a second connection portion (32), a stopping portion (33) formed by axial extension of the second connection portion (32), a hexagonal portion (34) formed by axial extension of the stopping portion (33), a threaded portion (35) formed by axial extension of the hexagonal portion (34), and a hexagonal assembly hole (31) axially extended from the second connection portion (32) to the threaded portion (35); the second connection portion (32) is disposed with at least one socket (321a, 321b) and the socket (321a, 321b) is mounted with a bead (36a, 36b); a spring (2) is fitted over the hexagonal portion (34) and abutting on one side against an edge of the stopping part (111) of the ring (1) and on the other side abutting against the stopping portion (33) of the drive body (3), wherein the ring (1) is axially movable within a certain distance around an outer diameter of the drive body (3) due to compression of the spring (2) and turned back to original position due to the spring (2); the second connection portion (32) is mounted into the axial hole (41) of the first connection portion (43) and the stopping portion (33) is against an edge of the first connection portion (43); the sleeve (4) is assembled with the drive body (3) first and then is mounted into the mounting hole (11) of the ring (1); the extension portion (42) is against an edge of the first end (1a) and the threaded portion (35) is extended from the second end (1b) of the ring (1) while the hexagonal portion (34) is fitted in the hexagonal hole (11a) of the ring (1); the flange (12) of the ring (1) is around an outer diameter of the extension portion (42) of the sleeve (4); thereby assembly of the quick release device (A) is completed, and wherein the drill rod (5) includes a drill head (52) and a shank (51); the shank (51) being a hexagonal prism and being extended axially to form the drill head (52); wherein a circular groove (53) is arranged at the shank (51) so that the bead (36a, 36b) of the quick release device (A) is fastened in the circular groove (53).

2. The assembly as claimed in claim 1, wherein the hole saw (6) is arranged with a threaded hole (61) for being engaged with the threaded portion (35) of the quick release device (A).

3. The assembly as claimed in anyone of the preceding claims, wherein the quick release device (A) is disposed on the hole saw (6).

4. The assembly as claimed in anyone of the preceding claims, wherein the drill rod (5) is slid into the quick release device (A) so as to form the hole saw assembly.

5. The assembly as claimed in anyone of the preceding claims, wherein one end of the drill rod (5) is extended from the quick release device (A) and is used as a transmission shaft of the hole saw assembly.

6. Method for fastening and releasing of a drill rod (5) of an assembly according to one of claims 1 to 5, comprising the steps of:
first axially moving the ring (1) of the quick release device (A) within a certain distance so that an edge of the first connection portion (43) of the sleeve (4) is away from the socket (321a, 321b) and the bead (36a, 36b) in the socket (321a, 321b) becomes moveable; thus the shank (51) of the drill rod (5) is able to be inserted into the assembly hole (31) of the quick release device (A), slid through the threaded portion (35) and extended from the hole saw (6); the ring (1) is not released until the circular groove (53) of the shank (51) is moved to the position of the socket (321a, 321b); then the ring (1) is turned back due to the spring (2) and the sleeve (4) is also turned back due to the ring (1); an inner surface of the first connection portion (43) of the sleeve (4) presses the bead (36a, 36b) so that the bead (36a, 36b) is stopped and fixed in the socket (321a, 321b) and against the circular groove (53) of the shank (51); thereby the shank (51) is locked and fastened in the quick release device (A);
then axially moving the ring (1) of the quick release device (A) within a certain distance again when the drill rod (5) is quickly slid out of the quick release device (A); thus the edge of the first connection portion (43) of the sleeve (4) is away from the socket (321a, 321b) and the bead (36a, 36b) in the socket (321a, 321b) becomes moveable; the circular groove (53) of the shank (51) is no more locked and fastened by the bead (36a, 36b) and the drill rod (5) is able to slide out of the quick release device (A) and release from the hole saw (6); the ring (1) is not released until the drill rod (5) is released completely.

## Patentansprüche

1. Lochsägenanordnung, umfassend eine Lochsäge (6), eine Schnelllösevorrichtung (A) und eine Bohrstange (5);
wobei die Schnelllösevorrichtung (A) einen Ring (1), eine Hülse (4) und einen Antriebskörper (3) umfasst, wobei der Ring (1) mit einem Montageloch (11), einem ersten Ende (1a) und einem zweiten Ende (1b) ausgestattet ist, wobei das Montageloch (11) ein kreisförmiges Loch ist, das den Ring (1) penetriert, wobei das erste Ende (1a) einen Flansch (12) aufweist, während das zweite Ende (1b) ein hexagonales Loch (11a) aufweist, wobei die Hülse (4) einen Verlängerungsabschnitt (42), einen ersten Verbindungsabschnitt (43), der durch Verlängerung des Verlängerungsabschnitts (42) gebildet wird, und ein axiales Loch (41) umfasst, das sich axial von dem Verlängerungsabschnitt (42) zu dem ersten Verbindungsabschnitt (43) erstreckt, wobei der Antriebskörper (3) einen zweiten Verbindungsabschnitt (32), einen Anschlagabschnitt (33), der durch axiale Verlängerung des zweiten Verbindungsabschnitts (32) gebildet wird, einen hexagonalen Abschnitt (34), der durch axiale Verlängerung des Anschlagsabschnitts (33) gebildet wird, einen Gewindeabschnitt (35), der durch axiale Verlängerung des hexagonalen Abschnitts (34) gebildet wird, und ein hexagonales Montageloch (31) umfasst, das von dem zweiten Verbindungsabschnitt (32) zu dem Gewindeabschnitt (35) axial verlängert ist, wobei der zweite Verbindungsabschnitt (32) mit zumindest einem Sockel (321a, 321b) ausgestattet ist und der Sockel (321a, 321b) ist mit einer Kugel (36a, 36b) ausgestattet, wobei eine Feder (2) über dem hexagonalen Abschnitt (34) angebracht ist und an einer Seite gegen einen Rand des Anschlagsabschnitts (111) des Rings (1) anliegt und an der anderen Seite gegen den Anschlagsabschnitt (33) des Antriebskörpers (3) anliegt, wobei der Ring (1) wegen der Kompression der Feder (2) innerhalb einer bestimmten Distanz um einen Außendurchmesser des Antriebskörpers (3) axial bewegbar ist und wegen der Feder (2) auf die Ausgangsposition zurückgesetzt wird, wobei der zweite Verbindungsabschnitt (32) in das axiale Loch (41) des ersten Verbindungsabschnitts (43) montiert ist und der Anschlagsabschnitt (33) gegen einen Rand des ersten Verbindungsabschnitts (43) anliegt, wobei die Hülse (4) zuerst mit dem Antriebskörper (3) montiert wird und dann in das Montageloch (11) des Ringes (1) montiert wird, wobei der Verlängerungsabschnitt (42) gegen einen Rand des ersten Endes (1a) anliegt und der Gewindeabschnitt (35) ist von dem zweiten Ende (1b) des Ringes (1) verlängert, während der hexagonale Abschnitt (34) in das hexagonale Loch (11a) des Ringes (1) eingepasst ist wobei der Flansch (12) des Ringes (1) um einen Außendurchmesser des Verlängerungsabschnitts (42) der Hülse (4) ist, wodurch der Aufbau der Schnelllösevorrichtung (A) abgeschlossen ist und
wobei die Bohrstange (5) einen Bohrkopf (52) und einen Schaft (51) umfasst, wobei der Schaft (51) ein hexagonales Prisma ist und axial verlängert ist, um den Bohrkopf (52) zu bilden, wobei die ringförmige Nut (53) sc an dem Schaft (51) angeordnet ist, dass die Kugel (36a, 36b) der Schnelllösevorrichtung (A) in der ringförmigen Nut (53) befestigt ist.

2. Anordnung gemäß Anspruch 1, bei der die Lochsäge (6) mit einem Gewindeloch (61) zum Eingriff mit dem Gewindeabschnitt (35) der Schnelllösevorrichtung (A) ausgestattet ist.

3. Anordnung gemäß einem der vorhergehenden Ansprüche, bei der die Schnelllösevorrichtung (A) an der Lochsäge (6) angebracht ist.

4. Anordnung gemäß einem der vorhergehenden Ansprüche, bei der die Bohrstange (5) in die Schnelllösevorrichtung (A) geschoben wird, um die Lochsägenanordnung zu bilden

5. Anordnung gemäß einem der vorhergehenden Ansprüche, bei der sich ein Ende der Bohrstange (5) von der Schnelllösevorrichtung (A) erstreckt und als eine Antriebswelle der Lochsägenanordnung verwendet wird.

6. Verfahren zum Befestigen und Lösen einer Bohrstange (5) einer Anordnung gemäß einem der Ansprüche 1 bis 5, die Schritte umfassend:
Zuerst axiales Bewegen des Rings (1) der Schnelllösevorrichtung (A) innerhalb einer bestimmten Distanz, so dass ein Rand des ersten Verbindungsabschnitts (43) der Hülse (4) weg von dem Sockel (321a, 321b) ist und die Kugel (36a, 36b) in dem Sockel (321a, 321b) bewegbar wird,
dadurch kann der Schaft (51) der Bohrstange (5) in das Montageloch (31) der Schnelllösevorrichtung (A) gesteckt werden, durch den Gewindeabschnitt (35) geschoben werden und von der Lochsäge (6) verlängert werden, wobei der Ring (1) nicht gelöst wird bis die ringförmige Nut (53) des Schafts (51) zu der Position des Sockels (321a, 321b) bewegt wird, dann wird der Ring (1) wegen der Feder (2) zurückgesetzt und die Hülse (4) wird ebenfalls wegen dem Ring (1) zurückgesetzt, eine Innenfläche des ersten Verbindungsabschnitts (43) der Hülse (4) drückt die Kugel (36a, 36b), so dass die Kugel (36a, 36b) gestoppt und in dem Sockel (321a, 321b) und gegen die ringförmige Nut (53) des Schafts (51) fixiert wird,
dadurch wird der Schaft (51) gesperrt und in der Schnelllöseanordnung (A) befestigt ist,
danach wieder axiales Bewegen des Rings (1) der Schnelllösevorrichtung (A) innerhalb einer bestimmten Distanz, wenn die Bohrstange (5) schnell aus der Schnelllösevorrichtung (A) geschoben wird, dadurch ist der Rand des ersten Verbindungsabschnitts (43) der Hülse (4) weg von dem Sockel (321a, 321b) und die Kugel (36a, 36b) in dem Sockel (321a, 321b) wird bewegbar, sodass die ringförmige Nut (53) des Schafts (51) nicht mehr gesperrt und von der Kugel (36a, 36b) befestigt ist und die Bohrstange (5) aus der Schnelllösevorrichtung (A) geschoben werden und von der Lochsäge (6) gelöst werden kann, wobei der Ring (1) nicht gelöst wird bis die Bohrstange (5) komplett gelöst ist.

## Revendications

1. Ensemble de scie-cloche comprenant: une scie-cloche (6), un dispositif de libération rapide (A) et une tige de forage (5);
dans lequel le dispositif de libération rapide (A) inclut un anneau (1), un manchon (4) et un corps d'entraînement (3); l'anneau (1) est agencé avec un trou de montage (11), une première extrémité (1a) et une seconde extrémité (1b); le trou de montage (11) est un trou circulaire pénétrant l'anneau (1); la première extrémité (1a) présente une bride (12) alors que la seconde extrémité (1b) présente un trou hexagonal (11a); le manchon (4) inclut une portion d'extension (42), une première portion de connexion (43) formée par extension de la portion d'extension (42), et un trou axial (41) qui s'étend axialement de la portion d'extension (42) à la première portion de connexion (43); le corps d'entraînement (3) inclut une seconde portion de connexion (32), une portion d'arrêt (33) formée par extension axiale de la seconde portion de connexion (32), une portion hexagonale (34) formée par extension axiale de la portion d'arrêt (33), une portion filetée (35) formée par extension axiale de la portion hexagonale (34), et un trou d'ensemble hexagonal (31) étendu axialement de la seconde portion de connexion (32) à la portion filetée (35); la seconde portion de connexion (32) est disposée avec au moins une douille (321a, 321b) et la douille (321a, 321b) est montée avec un cordon (36a, 36b); un ressort (2) est inséré sur la portion hexagonale (34) et bu-tant sur un côté contre une arête de la partie d'arrêt (111) de l'anneau (1) et sur l'autre côté butant contre la portion d'arrêt (33) du corps d'entraînement (3), dans lequel l'anneau (1) est axialement mobile à une certaine distance autour d'un diamètre extérieur du corps d'entraînement (3) en raison de la compression du ressort (2) et retourné à la position d'origine en raison du ressort (2); la seconde portion de connexion (32) est montée dans le trou axial (41) de la première portion de connexion (43) et la portion d'arrêt (33) est contre une arête de la première portion de connexion (43); le manchon (4) est assemblé tout d'abord avec le corps d'entraînement (3) et est monté dans le trou de montage (11) de l'anneau (1); la portion d'extension (42) est ensuite contre une arête de la première extrémité (1a) et la portion filetée (35) est étendue depuis la seconde extrémité (1b) de l'anneau (1) alors que la portion hexagonale (34) est insérée dans le trou hexagonal (11a) de l'anneau (1); la bride (12) de l'anneau (1) est autour d'un diamètre extérieur de la portion d'extension (42) du manchon (4); ainsi l'ensemble du dispositif de libération rapide (A) est achevé, et dans lequel la tige de forage (5) inclut une tête de forage (52) et un corps (51); le corps (51) étant un prisme hexagonal et étant étendu axialement pour former la tête de forage (52); dans lequel une rainure circulaire (53) est agencée sur le corps (51) de sorte que le cordon (36a, 36b) du dispositif de libération rapide (A) soit fixé dans la rainure circulaire (53).

2. Ensemble selon la revendication 1, dans lequel la scie-cloche (6) est agencée avec un trou fileté (61) pour être mise en prise avec la portion filetée (35) du dispositif de libération rapide (A).

3. Ensemble selon l'une quelconque des revendications précédentes, dans lequel le dispositif de libération rapide (A) est disposé sur la scie-cloche (6).

4. Ensemble selon l'une quelconque des revendications précédentes, dans lequel la tige de forage (5) est coulissée dans le dispositif de libération rapide (A) de sorte à former l'ensemble de scie-cloche.

5. Ensemble selon l'une quelconque des revendications précédentes, dans lequel une extrémité de la tige de forage (5) est étendue depuis le dispositif de libération rapide (A) et est utilisée en tant qu'arbre de transmission de l'ensemble de scie-cloche.

6. Procédé de fixation et de libération d'une tige de forage (5) d'un ensemble selon l'une des revendications 1 à 5, comprenant les étapes de:
tout d'abord le déplacement axial de l'anneau (1) du dispositif de libération rapide (A) à une certaine distance de sorte qu'une arête de la première portion de connexion (43) du manchon (4) soit loin de la douille (321a, 321b) et le cordon (36a, 36b) dans la douille (321a, 321b) devienne mobile; ainsi le corps (51) de la tige de forage (5) est apte à être inséré dans le trou d'ensemble (31) du dispositif de libération rapide (A), coulissé au travers de la portion filetée (35) et étendu depuis la scie-cloche (6); l'anneau (1) n'est pas libéré jusqu'à ce que la rainure circulaire (53) du corps (51) soit déplacée dans la position de la douille (321a, 321b); ensuite l'anneau (1) est retourné en raison du ressort (2) et le manchon (4) est aussi retourné en raison de l'anneau (1); une surface intérieure de la première portion de connexion (43) du manchon (4) presse le cordon (36a, 36b) de sorte que le cordon (36a, 36b) soit arrêté et fixé dans la douille (321a, 321b) et contre la rainure circulaire (53) du corps (51); ainsi le corps (51) est verrouillé et fixé dans le dispositif de libération rapide (A);
le déplacement axial ensuite de l'anneau (1) du dispositif de libération rapide (A) à une certaine distance de nouveau lorsque la tige de forage (5) est rapidement coulissée hors du dispositif de libération rapide (A); ainsi l'arête de la première portion de connexion (43) du manchon (4) est loin de la douille (321a, 321b) et le cordon (36a, 36b) dans la douille (321a, 321b) devient mobile ; la rainure circulaire (53) du corps (51) n'est plus verrouillée et fixée par le cordon (36a, 36b) et la tige de forage (5) est apte à coulisser hors du dispositif de libération rapide (A) et libérer de la scie-cloche (6); l'anneau (1) n'est pas libéré jusqu'à ce que la tige de forage (5) soit complètement libérée.
